(19) Europäisches Patentamt

**European Patent Office**

Office européen des brevets

(11) Numéro de publication: **0 307 338 B1**

(12) **FASCICULE DE BREVET EUROPEEN**

(45) Date de publication de fascicule du brevet: **03.11.93**   (51) Int. Cl.⁵: **H01Q 25/00**, H01Q 21/06, G01S 13/60

(21) Numéro de dépôt: **88460019.8**

(22) Date de dépôt: **30.08.88**

(54) **Antenne plaque microonde, notamment pour radar Doppler.**

(30) Priorité: **09.09.87 FR 8712579**

(43) Date de publication de la demande:
**15.03.89 Bulletin 89/11**

(45) Mention de la délivrance du brevet:
**03.11.93 Bulletin 93/44**

(84) Etats contractants désignés:
**AT BE CH DE ES GB IT LI NL SE**

(56) Documents cités:
**FR-A- 2 533 765**
**GB-A- 2 170 356**
**US-A- 3 363 253**
**US-A- 4 180 817**

**L'ONDE ELECTRIOUE, vol. 65, no. 1, janvier/février 1985, pages 35-41, Paris, FR; J.-P. DANIEL et al.: "Réseaux d'antennes imprimées dans la bande des 20 GHz/30 GHz"**

(73) Titulaire: **CENTRE REGIONAL D'INNOVATION ET DE TRANSFERT DE TECHNOLOGIE EN ELECTRONIOUE ET COMMUNICATIONS DE BRETAGNE ASSOCIATION LOI 1901**
**6, rue Kérampont**
**BP 332**

**F-22304 Lannion Cédex(FR)**

Titulaire: **CENTRE NATIONAL DE LA RECHER-CHE SCIENTIFIOUE, ETABLISSEMENT NATIO-NAL A CARACTERE SCIENTIFIOUE ET TECH-NOLOGIOUE( CNRS)**
**15, Ouai Anatole France**
**F-75700 Paris(FR)**

(72) Inventeur: **Dupuis, Philippe**
**Kerlessanouet**
**F-22700 Perros-Guirec(FR)**
Inventeur: **Daniel, Jean-Pierre Louis Marie**
**72, rue Dupont des Loges**
**F-35100 Rennes(FR)**
Inventeur: **Alanic, Jean-Luc**
**Trézardec**
**F-22220 Treguier(FR)**

(74) Mandataire: **Le Guen, Louis François**
**CABINET Louis LE GUEN**
**38, rue Levavasseur**
**B.P. 91**
**F-35802 Dinard Cédex (FR)**

EP 0 307 338 B1

## Description

La présente invention concerne une antenne plaque microonde et, plus particulièrement, une antenne de radar Doppler destiné à mesurer la vitesse réelle d'avancement d'un véhicule, tel qu'un tracteur.

La mesure de la vitesse réelle d'avancement d'un tracteur agricole par rapport au sol est intéressante à plusieurs titres. Se baser pour cette mesure sur la vitesse de rotation d'une ou de deux roues conduit à des erreurs sensibles. En effet, les roues des tracteurs agricoles sont, selon le terrain, la charge et le travail effectués, amenées à patiner plus ou moins fortement. Des taux de patinage de 25 % peuvent être observés. Or, pour optimiser la conduite, en particulier la consommation, on peut rechercher un taux de patinage plus faible, par exemple de 10 % environ. Le taux de patinage ne peut être connu qu'en comparant la vitesse de déplacement réelle et la vitesse d'au moins une roue. On peut vouloir aussi asservir au déplacement réel du tracteur des appareils de distribution de produits, tels que semences, engrais, herbicides, etc., afin d'obtenir un épandage précis d'une quantité de matière par unité de surface. On peut encore vouloir, par exemple dans des entreprises de travaux agricoles, mesurer la distance parcourue par le tracteur pour déterminer la surface travaillée. La mesure de la vitesse de déplacement réelle permet, après intégration, d'obtenir cette mesure avec précision.

Ce type de radar Doppler peut aussi être utilisé dans d'autres applications, telles que la mesure de vitesse et de déplacement d'un train, la mesure de vitesse d'engins de chantier ou encore d'automobiles.

Pour mesurer, à bord d'un véhicule, sa vitesse réelle, il est connu d'utiliser un radar Doppler dont le faisceau émis est réfléchi par le sol. Dans l'application aux véhicules terrestres, un radar Doppler peut être conçu pour fonctionner en microondes ou en ultrasons. Le brevet FR-A-2 554 599 décrit un dispositif de mesure par ultrasons, mais ce dispositif semble manquer de précision. C'est pourquoi, il est proposé, suivant l'invention, d'utiliser un radar Doppler à microondes. L'état de la technique des radar Doppler à microondes peut être illustré par les brevets suivants: US-A-4 354 191, US-A-4 316 173, US-A-4 527 160, US-A-3 997 900, US-A-4 517 566, UK-A-2 076 610, EP-A-0 123 870, UK-A-2 120 859, UK-A-2 172 462 , EP-A-0 095 300 et US-A-3 363 253.

Les sept premiers documents cités ci-dessus concernent des radars Doppler à antenne cornet, les deux suivants des radars à antenne imprimée et les derniers des radars utilisant le procédé Janus.

Les radars à antenne cornet présentent plusieurs inconvénients: ils sont encombrants; en saillie sous le véhicule, ils sont inclinés pour obtenir un faisceau incliné d'environ 35 ° vers l'avant ou l'arrière, comme le montrent les dessins des documents UK-A-2 076 610 et EP-A-0 123 870; ils sont donc vulnérables et ils sont sensibles aux variations d'inclinaison de la plate-forme sur laquelle ils sont fixés.

Dans les documents UK-A-2 120 859 et UK-A-2 172 462, il s'agit de radars à antenne imprimée destinés à être montés sur des avions. L'antenne imprimée produit des faisceaux du type "gamma" et comporte autant de points d'accès que de faisceaux produits, les points d'alimentation étant excités successivement si bien que les faisceaux sont aussi engendrés successivement. La commutation des points d'alimentation constitue une complication. De plus, dans le domaine du radar de véhicule terrestre, il est inutile de prévoir quatre ou six faisceaux.

Dans les documents EP-A-0 095 300 et US-A-3 363 253, il est décrit un radar de véhicule terrestre utilisant la configuration Janus bien connue dans les navigateurs Doppler des aéronefs. En pratique, il est prévu deux ou quatre faisceaux, un ou deux dirigés vers l'avant, les autre vers l'arrière. Ces faisceaux peuvent être produits par des antennes différentes ou par une seule antenne (voir le document US-A-3 363 253).

L'antenne à configuration Janus décrit dans ce dernier document est formée d'une pluralité de sous-réseaux linéaires identiques constitués, chacun, par une pluralité d'antennes élémentaires à fentes. Du fait de l'utilisation de telles antennes élémentaires, la structure de cette antenne est relativement complexe et son coût est par conséquent assez important.

Dans le domaine général des antennes micro-ondes, on connaît également des antennes constituées de réseaux d'antennes élémentaires sous forme de "patch". On peut consulter à titre d'exemple le document de brevet FR-A-2 533 765 et un article paru dans l'Onde Electrique de janvier/février 1985, volume 65, n° 1 intitulé "Réseaux d'antennes imprimés dans le bande des 20 GHz/30 GHz".

Dans ce dernier document, en particulier, il est décrit des reseaux d'antennes micro-ondes dont les antennes élémentaires sont des patchs formés d'une plaque carrée alimentée en un sommet.

L'avantage qui résulte de l'utilisation d'antennes élémentaires sous forme de "patch" est leur facilité de mise en oeuvre puisqu'on utilise pour ce faire la technologie des circuits imprimés.

Le but de l'invention est donc de prévoir une antenne imprimée dont la structure est telle qu'elle puisse être utilisée, à elle seule, dans un radar Doppler à configuration Janus.

EP 0 307 338 B1

Ce but est atteint par la mise en oeuvre de la combinaison des moyens qui sont définis dans la revendication 1. Des caractéristiques préférentielles sont indiquées dans les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue en plan d'une antenne suivant l'invention,

la Fig. 2 est une vue en plan, à plus grande échelle, d'une rangée d'éléments rayonnants utilisée dans l'antenne de la Fig. 1,

la Fig. 3 est une vue à plus grande échelle d'un élément rayonnant,

la Fig. 4 est une vue partielle en coupe transversale de l'antenne, suivant la ligne IV-IV de la Fig. 1,

la Fig. 5 est un diagramme de Smith illustrant les variations de l'impédance de l'antenne de la Fig. 1,

la Fig. 6 montre des diagrammes directionnels de l'antenne de la Fig. 1, dans le plan E, et

la Fig. 7 montre des diagrammes directionnels de l'antenne de la Fig. 1, dans le plan H.

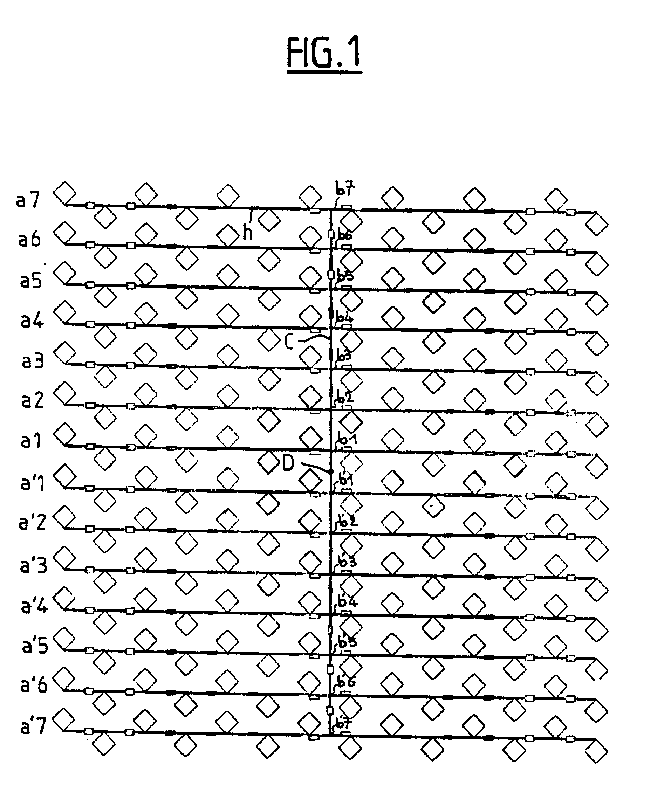

L'antenne de la Fig. 1 est formée de quatorze rangées d'éléments rayonnants a7, a6, a5, a4, a3, a2, a1, a'1, a'2, a'3, a'4, a'5, a'6, a'7. Les rangées a7 à a'7 sont identiques et parallèles entre elles; elles sont chacune symétriques par rapport à leurs centres respectifs b7 à b'7 qui sont alignés le long d'une ligne c perpendiculaire à la direction des rangées. Les centres b7, b6, b5, b4, b3, b2, b1, b'1, b'2, b'3, b'4, b'5, b'6, b'7 sont équidistants et respectivement symétriques deux à deux autour d'un point d.

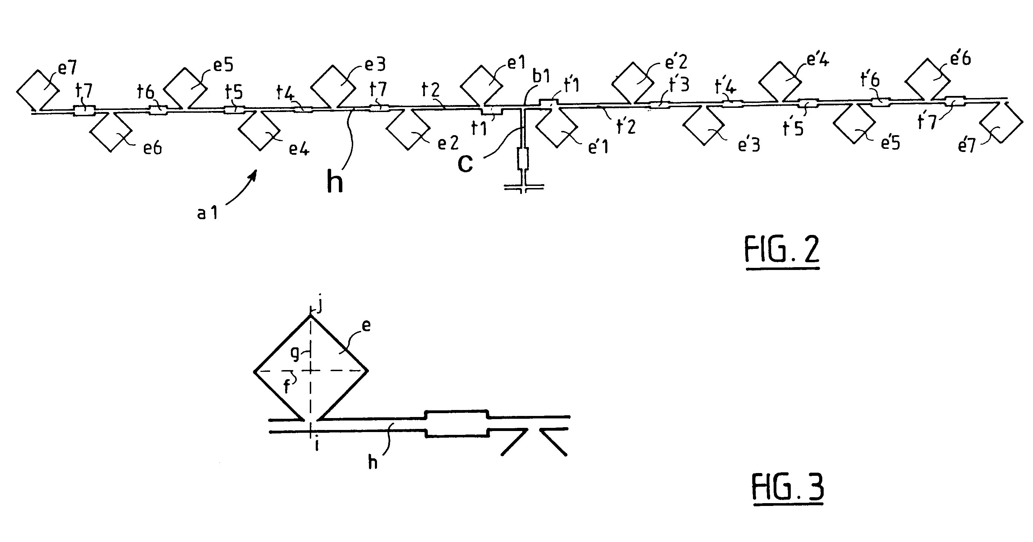

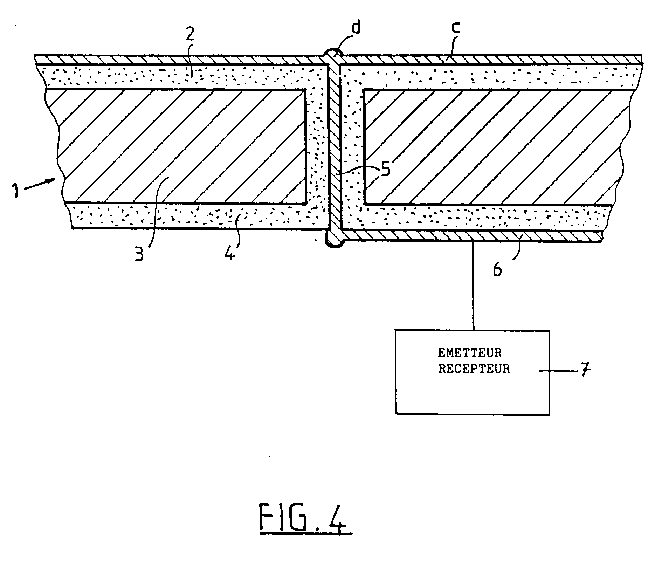

La rangée a1, montrée à la Fig. 2, comprend quatorze éléments rayonnants e7, e6, e5, e4, e3, e2, e1, e'1, e'2, e'3, e'4, e'5, e'6 et e'7. Chaque élément rayonnant e montré, à plus grande échelle à la Fig. 3, a la forme d'une surface carrée conductrice dont une diagonale f est dirigée selon les rangées et l'autre g selon la ligne c. Dans chaque élément rayonnant carré, un sommet i parmi les deux sommets i et j joints par la diagonale g se trouve aligné sur une ligne h. Dans chacun des éléments rayonnants e7, e5, e3, e1, e'2, e'4, e'6, l'autre sommet j de la diagonale g est d'un même côté de la ligne h tandis que les éléments rayonnants e6, e4, e2, e'1, e'3, e'5 et e'7 ont leurs sommets j de l'autre côté de la ligne h. Les sommets i7 à i'7 des éléments e7 à e'7 sont équidistants et sont deux à deux symétriques par rapport au centre b7 à b'7 de la rangée correspondante.

A noter que l'ensemble des éléments e7 à e1 de la rangée a1, Fig. 2, est symétrique, par rapport au centre b1, de l'ensemble des éléments e'1 à e'7. Chacune des rangées a7 à a'7 se déduit de la précédente par simple translation et il n'y a pas symétrie des rangées par rapport au point d.

Les centres b7 à b'7 sont reliées par une ligne conductrice d'alimentation c qui est elle-même alimentée au point central d, comme on le verra en relation avec la Fig. 4.

Dans chaque rangée, telle qu'à la Fig. 2, les points i sont reliés par une ligne d'alimentation conductrice h qui est elle-même alimentée à partir du point b1 relié à la ligne c.

Les distances respectives entre les centres b7 à b'7 et entre les sommets i7 à i'7 sont égales à une longueur d'onde $\lambda g$ qui est définie ci-dessous.

Dans un réseau linéaire d'antennes équidistantes dont le faisceau est dépointé d'un angle $\theta$, x étant le pas du réseau, chaque antenne individuelle est alimentée avec un décalage de phase $\Delta\phi$ par rapport à l'antenne individuelle précédente, le décalage de phase étant:

$$\Delta\phi = 2\pi\frac{d}{\lambda o} \sin \theta$$

où $\lambda o$ est la longueur d'onde dans le vide.

Dans l'antenne de l'invention, on a choisi une distance interélément égale à $\lambda g$ qui est la longueur d'onde de propagation guidée sur le substrat de l'antenne. Ainsi, pour un substrat du type verre téflon usuel, $\lambda g = 0.75 \lambda o$. Par ailleurs, l'alternance directionnelle, dans chaque rangée, des éléments rayonnants entraîne d'un élément rayonnant au suivant un déphasage $\Delta\theta = 180°$. On a donc:

$$\sin \theta = \frac{1}{2}/\frac{d}{\lambda o} \simeq \frac{2}{3}$$

Soit:

$\theta = 41°8$

Comme on l'a fait observer plus haut, chaque rangée, telle que la rangée a1, Fig. 1, se compose de deux ensembles symétriques par rapport au centre b1. Il en résulte que le diagramme directionnel est lui-même symétrique par rapport au plan normal au réseau le long de la ligne c, ce qui se traduit par deux lobes principaux inclinés, l'un à +41°8 et l'autre à -41°8.

Une telle antenne comporte des lobes secondaires qui sont réduits en pondérant dans chaque rangée les amplitudes des signaux d'excitation qui sont appliqués aux points i des éléments rayonnants. Avec des

3

éléments rayonnants carrés, dont le côté du carré et égal à λg/2, moins approximativement l'épaisseur du diélectrique, on a choisi, à titre d'exemple, les coefficients de pondération mentionnés dans le tableau suivant:

Tableau

| Elément rayonnant | Amplitude | Phase |
|:---:|:---:|:---:|
| a7 | 0,0517 | 180° |
| a6 | 0,1162 | 0° |
| a5 | 0,2609 | 180° |
| a4 | 0,4617 | 0° |
| a3 | 0,6870 | 180° |
| a2 | 0,8844 | 0° |
| a1 | 1 | 180° |
| a'1 | 1 | 0° |
| a'2 | 0,8844 | 180° |
| a'3 | 0,6870 | 0° |
| a'4 | 0,4617 | 180° |
| a'5 | 0,2609 | 0° |
| a'6 | 0,1162 | 180° |
| a'7 | 0,0517 | 0° |

Dans l'antenne de la Fig. 1, comme dans la rangée de la Fig. 2, pour réaliser ces coefficients de pondération, on utilise sur la ligne d'alimentation h, des transformateurs quart d'onde, tel que les transformateurs t7, t6, t5, t4, t3, t2, t1, t'1, t'2, t'3, t'4, t'5, t'6 et t'7, qui sont placés sur la ligne d'alimentation en amont de l'élément rayonnant portant le même indice de référence. Ces transformateurs sont obtenus en augmentant la largeur de la ligne d'alimentation d'une quantité qui se calcule suivant des formules que l'on peut trouver dans les ouvrages techniques suivants:
- T.C. Edwards, "Foundation for Microstrip Circuit Design", édité par John W. Riley and son, 1981,
- I.J. Bahl, P. Bhartia, "Microstrip Antenna", Artech House, 1980,
- J.R. James, P.S. Hall, C. Wood, "Microstrip Antenna - Theory and Design", Peter Peregrinus Ltd., 1981.

Enfin, le long de la ligne c, qui alimente les centres des rangées sont également prévus des transformateurs quart d'onde qui apportent les mêmes coefficients de pondération que dans le Tableau ci-dessus. Pour obtenir ces coefficients, il suffit, dans le Tableau, de remplacer a1 par b1, a2 par b2, etc.

On notera que les transformateurs t1 et t'1, Fig. 2, sont formés par un élargissement dissymétrique de la ligne alors que pour les autres transformateurs l'élargissement est symétrique. Sur le plan fonctionnel des transformateurs, ceci est sans importance, mais, dans le cas particulier des transformateurs t1 et t'1 qui sont inévitablement très proches des éléments rayonnants e1 et e'1, la dissymétrie est préférable pour que ces éléments rayonnants e1 et e'1 conservent eux la même forme que les autres éléments.

La coupe de la Fig. 4 montre le substrat 1 de l'antenne qui, à titre d'exemple, comporte trois couches 2 à 4. Les couches 2 et 4 sont, par exemple, en polypropylène pour lequel, à la fréquence d'utilisation de l'antenne, soit à 24 GHz, la constante diélectrique $\epsilon_r$ est voisine de 2,2 et la tangente de l'angle de perte tgδ est égale à $10^{-3}$. L'épaisseur des couches 2 et 4 est, de préférence, comprise entre 0,4 et 0,8 mm. La couche 3 est métallique et bonne conductrice, par exemple en aluminium et a une épaisseur, de préférence, comprise entre 2 et 4 mm. Les éléments rayonnants, les lignes d'alimentation c et h, et les transformateurs quart d'onde sont réalisés en circuit imprimé sur la couche 2. Le point d de la ligne c est relié à la face inférieure de la couche 4 par un fil conducteur 5 qui passe à travers les couches 2 à 4. Le trou percé dans la couche 3 pour le passage du fil 5 a un diamètre suffisant pour assurer l'isolation du fil 5. Sous la couche 4, le fil 5 est relié à une ligne conductrice imprimée 6 qui est reliée à un émetteur-récepteur Doppler, schématiquement représenté sous la forme d'un bloc 7.

En pratique, cet émetteur-récepteur Doppler 7 comprend, entre autres, un oscillateur microonde, par exemple à base de diode GUNN, et un mélangeur à une seule diode, l'ensemble étant imprimé sur la couche 4, comme la ligne 6. L'émetteur-récepteur Doppler 7 peut, en variante, comprendre un circuit de mélange comportant deux diodes permettant de séparer les signaux provenant des deux faisceaux et donc faire une discrimination de sens.

4

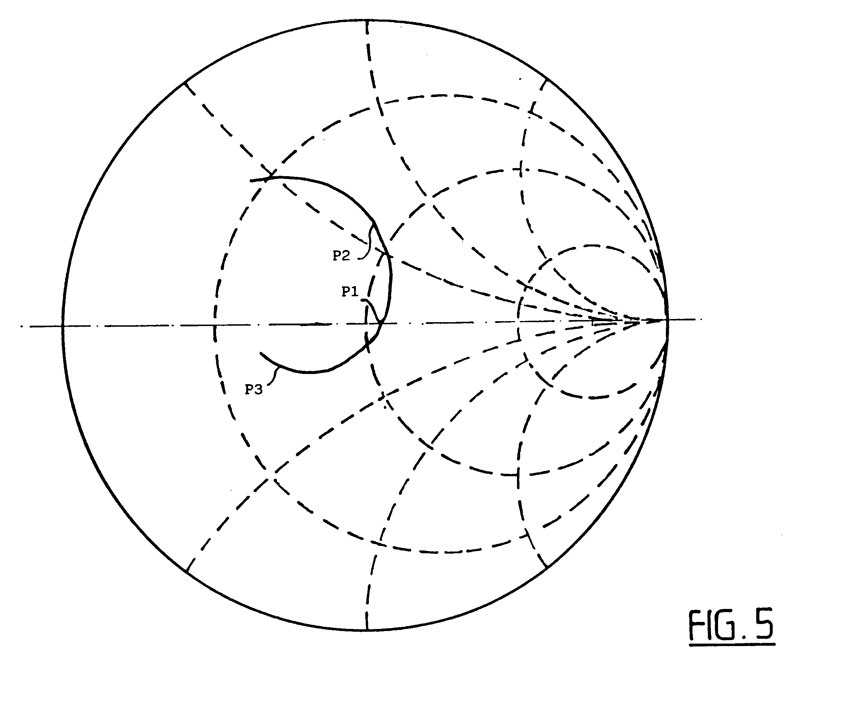

L'abaque de Smith de la Fig. 5 a été tracé pour différentes fréquences entre 23,5 et 24,5 GHz. Il apparaît que, pour une fréquence d'utilisation de 24,1 GHz, indiquée par le marqueur P1, l'antenne est particulièrement bien adaptée. Les marqueurs P2 et P3 correspondent aux fréquences 23,8 GHz et 24,4 GHz. Il apparaît, sur l'abaque, qu'autour de la fréquence de 24,1 GHz, le rapport d'ondes stationnaires ROS est bon. A noter encore que, pour cette fréquence, la Fig. 1 montre l'antenne à l'échelle 1.

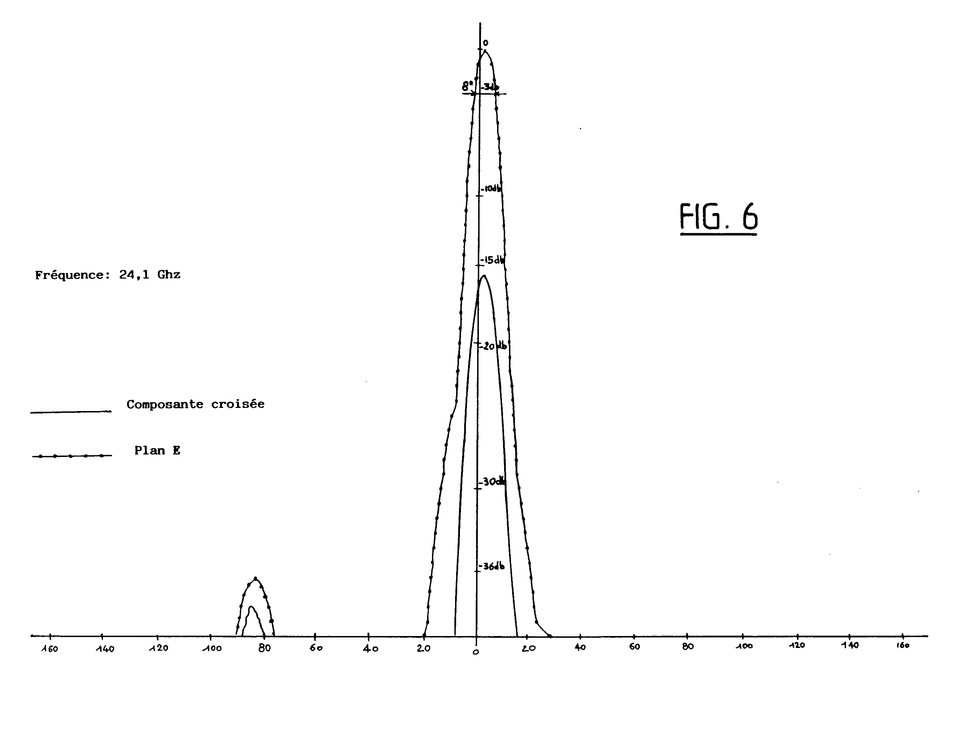

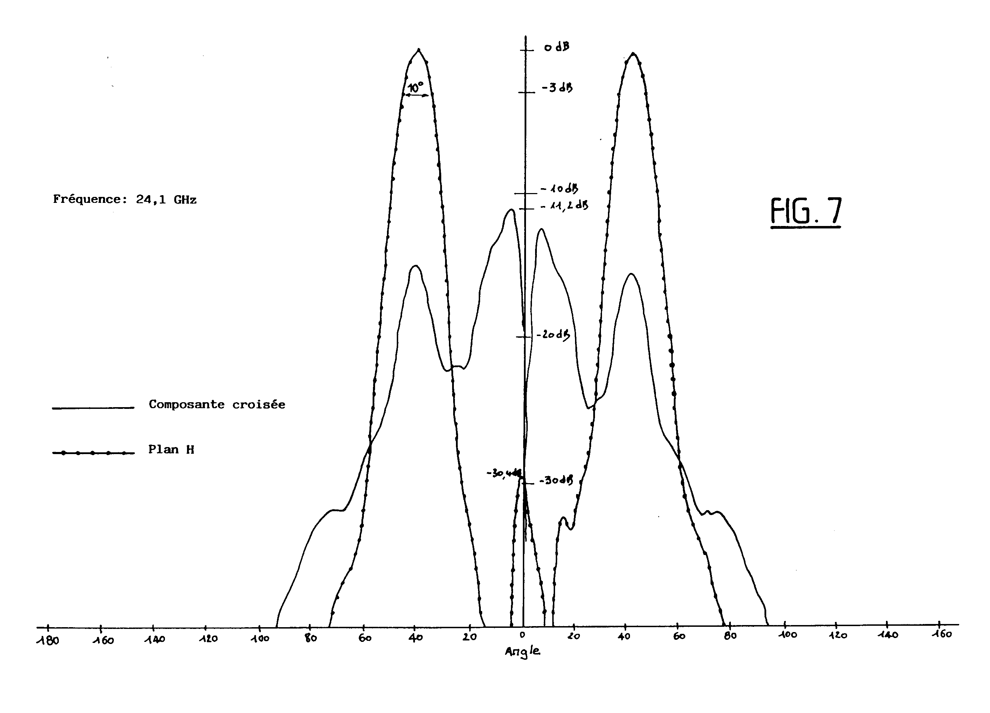

Les diagrammes directionnels de la Fig. 6, tracés pour une fréquence de 24,1 GHz, montrent que la largeur du lobe est inférieure à 10°. Les diagrammes directionnels de la Fig. 7, également tracés pour une fréquence de 24,1 GHz, montrent les deux lobes dépointés de - 40° et + 41° dont les largeurs à 3dB sont de l'ordre de 20°. Les lobes secondaires sont inférieurs à - 30 dB, ce qui est particulièrement intéressant.

Dans l'exemple de réalisation qui vient d'être décrit, chaque élément rayonnant était, comme le montre la Fig. 3, une surface carrée. Cette géométrie, qui correspond à un exemple de réalisation préféré, n'est pas indispensable. Ainsi, on pourrait choisir une géométrie circulaire, triangulaire, pentagonale ou autre, à la condition de conserver la symétrie par rapport à une direction parallèle à la ligne c.

Les géométries carrées, triangulaires ou pentagonales dans lesquelles un sommet de l'antenne élémentaire est relié à la ligne d'alimentation permettent d'assurer une bonne reproductibilité des conditions d'alimentation.

La géométrie circulaire offre la possibilité d'utiliser une polarisation circulaire, mais nécessite une plus grande précision de fabrication pour assurer la reproductibilité d'alimentation. La géométrie pentagonale combine les différents avantages mentionnés ci-dessus.

Dans l'exemple décrit, le nombre de rangées est égal au nombre d'éléments rayonnants dans une rangée, mais cela n'est évidemment pas obligatoire. Dans le cas où les nombres sont différents, la pondération n'est évidemment pas la même sur la ligne c que dans chaque rangée.

En utilisant l'antenne de la Fig. 1, des mesures ont aussi été effectuées avec un radôme plan réalisé en polypropylène qui était placé parallèlement à l'antenne devant celle-ci. On a constaté que le radôme ne dégradait que très légèrement les performances de l'antenne.

Des mesures ont également été effectuées en associant l'antenne à un émetteur et un récepteur fonctionnant à 24,1 GHz pour tester la précision du radar ainsi formé. Ces mesures ont été effectuées sur un simulateur avec un tapis roulant. On a pu vérifier, en faisant varier l'inclinaison de l'antenne par rapport au tapis roulant, que la sensibilité aux variations d'inclinaison était réduite de façon substantielle par rapport aux résultats obtenus avec un radar à un seul faisceau.

**Revendications**

1. Antenne plaque micro-onde, notamment pour radar Doppler à configuration Janus, constituée par une pluralité de sous-réseaux (a7, a6, ..., a1, a'1, a'2, ..., a'7) linéaires identiques, parallèles et symétriques, les centres de symétrie (b7, b6, ..., b1, b'1, b'2, ..., b'7) des sous-réseaux (a7 à a'7) sont alignés sur une ligne (c) perpendiculaire à la direction longitudinale des sous-réseaux, chaque sous-réseau étant constitué par une pluralité d'éléments rayonnants (e7, e6, ..., e1, e'1, e'2, ..., e'7) en nombre pair disposés à intervalles réguliers, caractérisée en ce que les sous-réseaux (a7 à a7') sont alimentés en phase et en ce que les éléments rayonnants sont des "patchs" (e7 à e'7) disposés alternativement d'un côté et de l'autre d'une ligne d'alimentation secondaire (h) alimentée au centre de symétrie du sous-réseau, lesdits éléments rayonnants étant alimentés de manière à rayonner des champs déphasés de 180° d'un patch au suivant, la distance entre deux éléments rayonnants consécutifs étant égale à une longueur d'onde guidée sur le substrat (2) du circuit imprime sur lequel sont imprimés les patchs et correspondant à la fréquence de fonctionnement de l'antenne, les éléments rayonnants d'un sous-réseau ayant leurs alimentations pondérées pour réduire les lobes secondaires.

2. Antenne suivant la revendication 1, caractérisée en ce que l'alimentation des centres de symétrie des sous-réseaux est également pondérée.

3. Antenne suivant la revendication 1 ou 2, caractérisée en ce que les pondérations sont réalisées au moyen de transformateurs quart d'onde (t7, t6, ..., t1, t'1, t'2, ..., t'7).

4. Antenne suivant la revendication 1, caractérisée en ce que chaque patch est une surface carrée conductrice dont le côté est égal à la moitié de la longueur d'onde guidée, réduite approximativement de l'épaisseur du substrat, dont un coin (i) est relié galvaniquement à la ligne d'alimentation secondaire (h) et dont la diagonale (g) passant par ce point de contact galvanique est perpendiculaire à la direction longitudinale du sous-réseau.

5

**5.** Antenne suivant l'une des revendications précédentes, caractérisée en ce qu'elle comporte encore un radôme plan placé parallèlement devant elle.

**Claims**

**1.** Microwave plate antenna, especially for a Doppler radar of Janus configuration, constituted by a plurality of identical linear subnetworks (a7, a6, ..., a1, a'1, a'2, ..., a'7), which are parallel and symmetrical, the centres of symmetry (b7, b6, ..., b1, b'1, b'2, ..., b'7) of the subnetworks (a7 to a'7) are aligned on a line (c) which is perpendicular to the longitudinal direction of the subnetworks, each subnetwork being constituted by a plurality of radiating elements (e7, e6, ..., e1, e'1, e'2, ..., e'7) of an even number arranged at regular intervals, characterised in that the subnetworks (a7 to a'7) are fed in phase and in that the radiating elements are "patches" (e7 to e'7) alternately disposed on either side of a secondary feed line (h) fed at the centre of symmetry of the subnetwork, said radiating elements being fed in such a way that consecutive patches radiate fields 180° out of phase, the distance between two consecutive radiating elements being equal to the length of a wave guided on the substrate (2) of the printed circuit on which the patches are printed and corresponding to the operational frequency of the antenna, the feeding to the radiating elements in a subnetwork being balanced so as to reduce the secondary lobes.

**2.** Antenna according to claim 1, characterised in that the feeding to the centres of symmetry of the subnetworks is equally balanced.

**3.** Antenna according to claim 1 or 2, characterised in that the balancing is effected by means of quarter-wave transformers (t7, t6, ..., t1, t'1, t'2, ..., t'7).

**4.** Antenna according to claim 1, characterised in that each patch is a square conducting surface the side of which is equal to half of the wavelength of the guided wave, reduced by approximately the thickness of the substrate, a corner (i) of which is galvanically connected to the secondary feed line (h) and whose diagonal (g) passing through this point of galvanic contact is perpendicular to the longitudinal direction of the subnetwork.

**5.** Antenna according to one of the preceding claims, further characterised in that it comprises a planar radome placed in parallel in front thereof.

**Patentansprüche**

**1.** Mikrowellenplattenantenne, insbesondere für Dopplerradar mit Janus-Aufbau, gebildet durch eine Vielzahl von linearen, identischen, parallelen Unternetzen (a7, a6, ..., a1, a'1, a'2 ...., a'7), wobei die Symmetrie-Mittelpunkte (b7, b6, ..., b1, b'1, b'2, ... b'7) der Unternetze (a7 bis a'7) entlang einer zur Längsrichtung der Unternetze senkrechten Linie (c) ausgerichtet sind und jedes Unternetz durch eine Vielzahl von in gleichmäßigen Abständen angeordneten strahlenden Elementen (e7, e6, ..., e1, e'1, e'2, ..., e'7) gerader Anzahl gebildet ist, **dadurch gekennzeichnet**, daß die Unternetze (a7 bis a'7) gleichphasig gespeist sind und die strahlenden Elemente sogenannte "patchs" (e7 bis e'7) bilden, die abwechselnd an der einen oder der anderen Seite einer sekundären, im Symmetrie-Mittelpunkt des Unternetzes gespeisten Speiseleitung (h) eingespeist sind, daß die strahlenden Elemente derart gespeist sind, daß sie von einem patch zum nächsten um 180° phasenverschobene Felder ausstrahlen, daß der Abstand zwischen zwei aufeinanderfolgenden strahlenden Elementen gleich der Länge der auf dem Substrat (2) der gedruckten Schaltung geführten Welle ist, auf die die patchs entsprechend der Arbeitsfrequenz der Antenne gedruckt sind, wobei die strahlenden Elemente eines Unternetzes zur Verringerung der sekundären Keulen gegeneinander gewichtete Einspeisungen aufweisen.

**2.** Antenne nach Anspruch 1, **dadurch gekennzeichnet**, daß die Einspeisung der Symmetrie-Mittelpunkte der Unternetze gleichermaßen gewichtet ist.

**3.** Antenne nach Anspruch 1 oder 2, **dadurch gekennzeichnet**, daß die Gewichtungsfaktoren durch Viertel-Wellenlängen-Transformatoren (t7, t6, ..., t1, t'1, t'2, ..., t'7) realisiert sind.

4. Antenne nach Anspruch 1, **dadurch gekennzeichnet**, daß jeder patch eine viereckige leitende Oberfläche ist, deren Seite gleich der Hälfte der Länge der orientierten Welle, reduziert etwa um die Dicke des Substrats, ist und von der eine Ecke (i) galvanisch mit der sekundären Speiseleitung (h) verbunden und dessen durch den Punkt der galvanischen Verbindung verlaufende Diagonale (g) senkrecht zur Längsrichtung des Unternetzes verläuft.

5. Antenne nach einem der vorangehenden Ansprüche, **dadurch gekennzeichnet**, daß sie zusätzlich eine flache, parallel vor ihr angeordnete Antennenverkleidung enthält.

# FIG.1

EP 0 307 338 B1

e7  t7  t6  e5  t5  t4  e3  t7  t2  e1  b1  t'1  e'2  t'3  t'4  e'4  t'6  e'6

e6  e4  h  e2  t1  c  e'1  t'2  e'3  t'5  e'5  t'7  e'7

a1

FIG. 2

j  e  g  f  i  h

FIG. 3

FIG.4

FIG. 5

## FIG. 6

Fréquence: 24,1 Ghz

——————— Composante croisée

•——•——•——• Plan E

Fréquence: 24,1 GHz

FIG. 7

Composante croisée

Plan H

Angle

EP 0 307 338 B1